# EUROPEAN PATENT APPLICATION

(11) **EP 4 328 205 A1**
(43) Date of publication of application: **28.02.2024**
(21) Application number: 22791687.1
(22) Date of filing: 15.04.2022
(51) Int. Cl.: C03C 27/12, B60J 1/00

(54) **LAMINATED GLASS FOR AUTOMOBILE WINDOWS, AUTOMOBILE, AND METHOD FOR MANUFACTURING LAMINATED GLASS FOR AUTOMOBILE WINDOWS**

(30) Priority: 20.04.2021 JP 2021071148
(71) Applicant: AGC INC., Chiyoda-ku, Tokyo 1008405 (JP)
(72) Inventor: MORITA, Yoshinobu, Tokyo 100-8405 (JP); OHBA, Yoshiaki, Tokyo 100-8405 (JP)
(74) Representative: Müller-Boré & Partner Patentanwälte PartG mbB
(86) International application number: PCT/JP2022/017962
(87) International publication number: WO 2022/224913

(57) **Abstract**

Laminated glass for automobile windows that is obtained by bonding a first glass plate to a second glass plate through an interlayer film includes a first main surface of the first glass plate, the first main surface being situated on an opposite side of the first glass plate from the interlayer film, a second main surface of the first glass plate, the second main surface being in contact with the interlayer film, a third main surface of the second glass plate, the third main surface being in contact with the interlayer film, and a fourth main surface of the second glass plate, the fourth main surface being situated on an opposite side of the second glass plate from the interlayer film. Each of the first glass plate and the second glass plate has a chamfered region at an edge thereof, and at least one of the chamfered regions of the first glass plate and the second glass plate has a rough surface portion having an arithmetic average roughness Ra described in JIS B 0601:2013 of between 50 um and 200 µm, inclusive.

## Description

### Technical Field

The present disclosure relates to laminated glass for automobile windows, an automobile, and a method for producing laminated glass for automobile windows.

### Background Art

Automobiles are required to have performance capable of reducing impact on the body of a person when the person collides with an automobile. For example, Patent Document 1 discloses a configuration in which impact on a pedestrian is reduced by the separating of the cowl louver and the windshield which were connected to each other, when impact is applied from forward to downward with respect to surroundings of the cowl louver and the windshield glass due to a front collision of the pedestrian with the automobile. Such performance of reducing impact on a person during a collision is also required for automobile window glass itself.

Laminated glass in which two glass plates are bonded to each other via an interlayer film is generally used for automobile window glass, particularly for windshields (front glass). Patent Document 2 describes that the glass plate strength is improved without causing a decrease in productivity by providing a processed region with higher breaking strength than that of a chamfered region between the surface of the glass plate and the chamfered region.

### [Related Art Documents]

### [Patent Documents]

Patent Document 1: Japanese Unexamined Patent Application No. 2017-213928
Patent Document 2: Japanese Unexamined Patent Application No. 2002-154321

### Summary of the Invention

### Problems to be Solved by the Invention

In laminated glass for automobile windows, in order to improve performance of reducing impact on a person during a collision, it is important that a glass plate constituting the laminated glass appropriately breaks during the collision to absorb the impact. However, the configuration of the window glass as described in Patent Document 2 is intended to improve the strength of the glass plate as a barrier against flying objects from the outside, and no consideration is given to the performance of the laminated glass required during a collision with a person. Accordingly, a configuration capable of reducing impact on a person during a collision is required. Furthermore, laminated glass for automobile windows needs to maintain sufficient toughness or durability as automobile window glass.

One aspect of the present disclosure is to provide laminated glass for automobile windows that reduces impact on a person during a collision and that has sufficient toughness as automobile window glass.

### Means for Solving the Problem

According to one aspect of the present disclosure, automobile window laminated glass that is obtained by bonding a first glass plate to a second glass plate through an interlayer film includes a first main surface of the first glass plate, the first main surface being situated on an opposite side of the first glass plate from the interlayer film, a second main surface of the first glass plate, the second main surface being in contact with the interlayer film, a third main surface of the second glass plate, the third main surface being in contact with the interlayer film, and a fourth main surface of the second glass plate, the fourth main surface being situated on an opposite side of the second glass plate from the interlayer film. Each of the first glass plate and the second glass plate has a chamfered region at an edge thereof, and at least one of the chamfered region of the first glass plate and the chamfered region of the second glass plate has a rough surface portion having an arithmetic average roughness Ra described in JIS B 0601:2013 of between 50 um and 200 um, inclusive.

### Effects of the Invention

According to one aspect of the present disclosure, automobile window laminated glass that reduces impact on a person during a collision and that has sufficient toughness as automobile window glass can be provided.

### Brief Description of Drawings

[FIG. 1] FIG. 1 is a front view of an automobile provided with laminated glass according to an embodiment of the present disclosure.
[FIG. 2] FIG. 2 is a front view of the laminated glass (windshield) of FIG. 1.
[FIG. 3] FIG. 3 is a cross-sectional view taken along line I-I in FIG. 2, and is a diagram for explaining a first embodiment.
[FIG. 4] FIG. 4 is a diagram for explaining chamfering and chamfered regions.
[FIG. 5] FIG. 5 is a diagram illustrating a modified example of the first embodiment.
[FIG. 6] FIG. 6 is a diagram illustrating a modified example of a second embodiment.
[FIG. 7] FIG. 7 is a diagram illustrating a modified example of a third embodiment.
[FIG. 8] FIG. 8 is a diagram illustrating a modified example of a fourth embodiment.
[FIG. 9] FIG. 9 is a cross-sectional view taken along line II-II of FIG. 8.
[FIG. 10] FIG. 10 is a diagram illustrating a modified example of the fourth embodiment.

### Means for Solving the Problem

### <First Embodiment>

### (Basic Configuration of Laminated Glass)

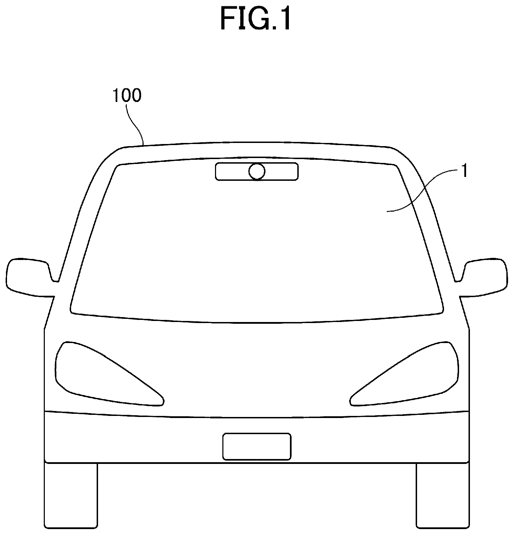

FIG. 1 illustrates an automobile 100 on which automobile window laminated glass 1 according to the present embodiment is provided. In the example illustrated in FIG. 1, the automobile window laminated glass 1 is a glass provided to a front opening (window) of a vehicle body, that is, a windshield. The automobile window laminated glass 1 according to the present embodiment, however, can also be used as a window glass other than the windshield. Examples of alternatives to the windshield include a side glass, a rear glass, and a roof glass.

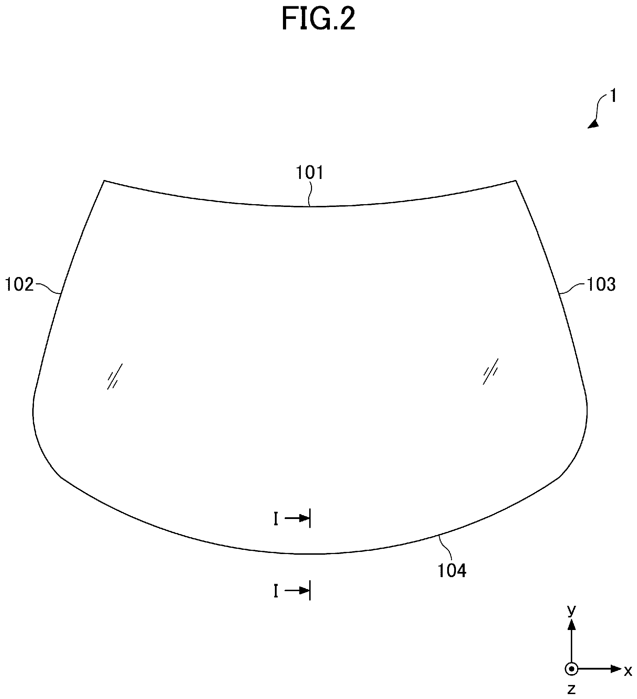

FIG. 2 is a plan view illustrating only the automobile window laminated glass 1 in FIG. 1 as viewed from the outside of the automobile. As illustrated in FIG. 2, the automobile window laminated glass 1 of the present embodiment may have a substantially rectangular shape in a plan view. In such a case, the laminated glass 1 may have, in a case where the laminated glass 1 is provided on the automobile and viewed from the outside of the automobile, an upper side 101 located on the upper side, a lower side 104 located on the lower side, a left side 102 located on the left side, and a right side 103 located on the right side (the left side and the right side are also collectively referred to as lateral sides 102 and 103) of the glass. In the drawing, in a case where the automobile window laminated glass 1 according to the present embodiment is provided on the automobile, as viewed from the front of the glass, a direction from approximately left to right is defined as an x-direction, a direction from approximately bottom to top is defined as a y-direction, and a thickness direction of the laminated glass 1 from a vehicle-interior side to a vehicle-exterior side is defined as a z-direction (a direction orthogonal to the x-direction and the y-direction).

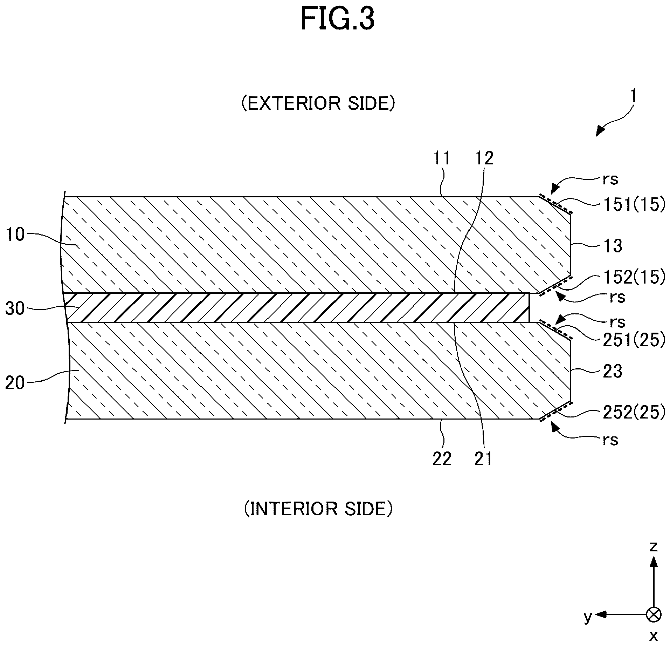

FIG. 3 illustrates a cross-sectional view (cross-sectional view taken along line I-I) of the vicinity of the peripheral edge of the automobile window laminated glass 1 cut in a direction orthogonal to the peripheral edge. As illustrated in FIG. 3, the automobile window laminated glass 1 is obtained by bonding a first glass plate 10 to a second glass plate 20 through an interlayer film 30. In the example of FIG. 3, the first glass plate 10 is situated on the vehicle-exterior side, and the second glass plate 20 is situated on the vehicle-interior side. The first glass plate 10 has a first main surface 11 that is disposed on the side opposite to the interlayer film 30, and a second main surface 12 that is in contact with the interlayer film 30. The second glass plate 20 has a third main surface 21 that is in contact with the interlayer film 30, and a fourth main surface 22 that is disposed on the side opposite to the interlayer film 30.

The first glass plate 10 and the second glass plate 20 (hereinafter also referred to as glass plates collectively) are preferably made of inorganic glass. Suitable inorganic glass may include soda lime silicate glass, aluminosilicate glass, borate glass, lithium aluminosilicate glass, borosilicate glass, and the like. The process of forming the glass plates made of inorganic glass is not particularly limited, however, the glass plates are preferably glass plates formed by a float process or the like, for example. The glass plates may be non-tempered glass (raw glass). The non-tempered glass is obtained by forming molten glass into a plate shape and annealing, and is not subjected to a tempering treatment such as an air-cooled tempering treatment or a chemically tempering treatment. By using the non-tempered glass, even when the glass breaks due to impact, the entire surface of the glass is not finely crushed, and the field of view of an occupant can be ensured even during an accident.

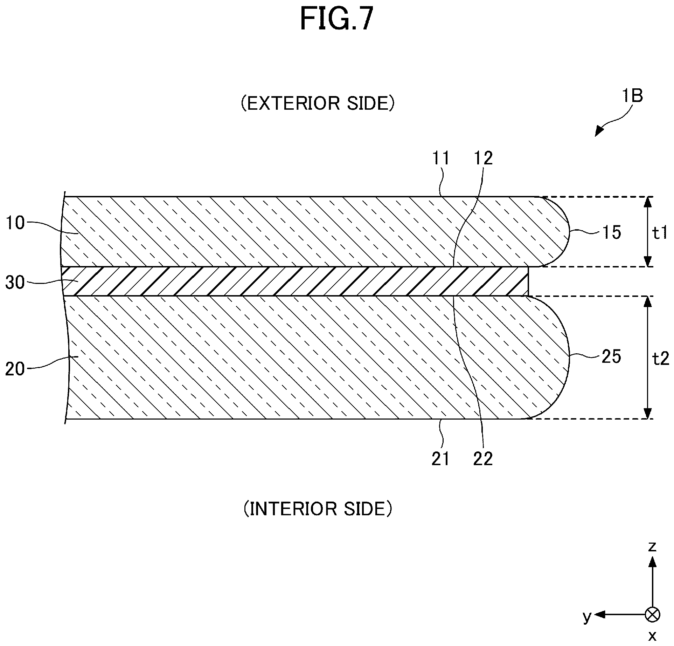

The thickness of the first glass plate 10 and the thickness of the second glass plate 20 may be the same or may be different from each other as illustrated in an embodiment (FIG. 7) described later. The specific thicknesses of the first glass plate 10 and the second glass plate may each be between 0.5 mm and 3.5 mm, inclusive. The thickness of the automobile window laminated glass 1 as a whole (including the interlayer film 30) may be between 2.3 mm and 8.0 mm, inclusive. Note that the first glass plate 10 and the second glass plate 20 may have the same configuration (materials constituting the glass plates, production method of the glass plates, and the like).

The material of the interlayer film 30 disposed between the first glass plate 10 and the second glass plate 20 is not particularly limited, however, it is preferably a thermoplastic resin. Suitable material of the interlayer film 30 may include a thermoplastic resin conventionally used for an equivalent application such as a plasticized polyvinyl acetal-based resin, a plasticized polyvinyl chloride-based resin, a saturated polyester-based resin, a plasticized saturated polyester-based resin, a polyurethane-based resin, a plasticized polyurethane-based resin, an ethylene-vinyl acetate copolymer-based resin, an ethylene-ethyl acrylate copolymer-based resin, a cycloolefin polymer resin, an ionomer resin, and the like. A resin composition containing modified block copolymer hydride as described in Japanese Patent No. 6065221 can also be suitably employed. Among the above-described resins, the plasticized polyvinyl acetal-based resin is preferably used because of its excellence in terms of balance of performances, such as transparency, weather resistance, strength, bond strength, resistance to penetration, absorbability for impact energy, humidity resistance, thermal insulating property, and sound insulating property. The above-described thermoplastic resin may be used singly, or two or more types of thermoplastic resins may be used in combination. The term "plasticized" in the above-described plasticized polyvinyl acetal-based resin means that the resin is plasticized by adding a plasticizing agent. The same applies to the other plasticized resins.

The interlayer film 30 may be a resin not containing a plasticizer, for example, an ethylene-vinyl acetate copolymer resin. The above-described polyvinyl acetal-based resin may include, for example, polyvinyl formal resin that is obtained by reacting polyvinyl alcohol (PVA) and formaldehyde, narrowly defined polyvinyl acetal-based resin that is obtained by reacting PVA and an acetaldehyde, polyvinyl butyral resin (PVB) that is obtained by reacting PVA and n-butyl aldehyde, and the like. Especially, PVB is preferable, because of its excellence in terms of balance of performances, such as transparency, weather resistance, strength, bond strength, resistance to penetration, absorbability for impact energy, humidity resistance, thermal insulating property, and sound insulating property. The above-mentioned resins may be used singly, or two or more types of polyvinyl acetal-based resins may be used in combination.

Furthermore, the peripheral edge of the automobile window laminated glass 1 may be provided with a shielding layer (which will be described later as reference numeral 50) for protecting a sealant or the like that bonds the automobile window laminated glass 1 to the vehicle body and holds the laminated glass. The shielding layer can be formed by, for example, applying a ceramic color paste of a low-lightness color such as black, gray, or brown color containing a meltable glass frit containing a black pigment, and then firing the paste. The shielding layer may be formed on the peripheral edge of one or more of the second main surface 12, the third main surface 21, and the fourth main surface 22 (FIG. 3) of the automobile window laminated glass 1, and preferably on the peripheral edge of at least one of the second main surface 12 and the fourth main surface 22. The shielding layer may be provided from the peripheral edge end of the glass plate to between 10 mm and 300 mm, inclusive.

The automobile window laminated glass 1 can be produced by stacking the first glass plate 10 and the second glass plate 20, which are obtained by bending such as gravity bending, press bending, or the like, with the interlayer film 30 interposed therebetween, and pressure-bonding the stacked glass plates. An autoclave or the like can be used for the pressure-bonding.

Note that, in the above-described bending, the first glass plate 10 and the second glass plate 20 can be processed so as to have a desired curvature in one direction or two directions, for example, in both a vertical direction and a horizontal direction in a case where the glass plates are provided to a front window frame of the automobile. The radius of curvature of the first glass plate 10 and the radius of curvature of the second glass plate 20 may be the same or may be different from each other.

In the production of the automobile window laminated glass 1, flat glass plates are prepared before a pre-process prior to the bending process. The preparation of the flat glass plates may include, for example, cutting out raw plates from a band-shaped glass plate obtained by a float process, cutting the raw plates into a desired outer shape, for example, an outer shape of a windshield, and chamfering the raw plates. In the example illustrated in FIG. 3, the end surfaces of the first glass plate 10 and the second glass plate 20 are both chamfered to form chamfered regions 15 (a first chamfered region 151 and a second chamfered region 152) of the first glass plate 10 and chamfered regions 25 (a third chamfered region 251 and a fourth chamfered region 252) of the second glass plate 20.

### (Chamfering and Chamfered Region)

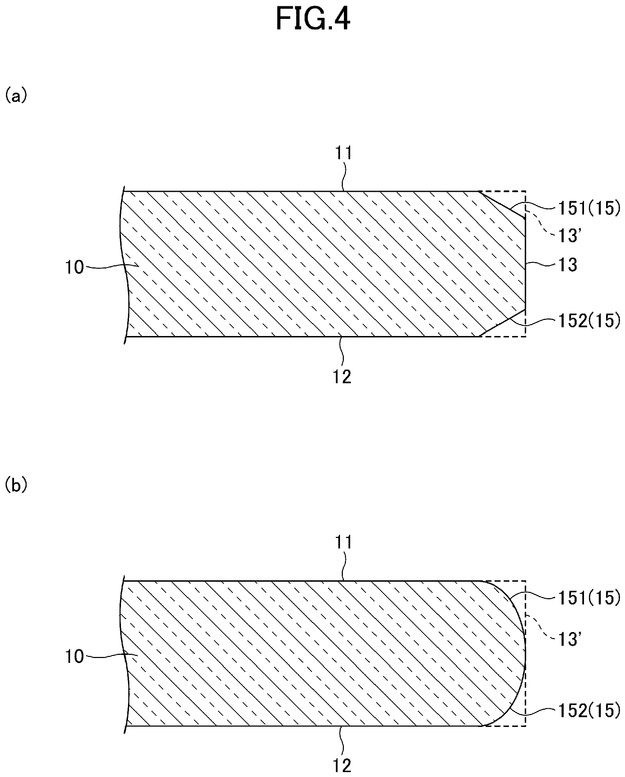

Here, the chamfering will be described with reference to FIG. 4. FIG. 4(a) illustrates the first glass plate 10 of FIG. 3 as an example. In FIG. 4(a), the outer contour of the portion removed by chamfering is indicated by a dotted line. In a state before chamfering, an original side surface 13' of the glass plate (a side surface immediately after cutting into a desired shape in the glass plate preparation process) normally extends in a direction orthogonal to the first main surface 11 and the second main surface 12, and a corner having an angle of about 90° is formed at each of positions where the main surface 11 and the main surface 12 are in contact with the original side surface 13'. Chamfering is a process of removing such a sharp corner to form a surface. By preforming such a process, a worker can be prevented from being injured when the worker comes into contact with the corner, or a device or a member other than the glass plate can be prevented from being damaged when the device or the member comes into contact with the corner in a subsequent process.

Note that FIG. 4(a) illustrates an example of thread chamfering, and each of the chamfered regions 15 (the first chamfered region 151 and the second chamfered region 152) formed by the chamfering has a flat surface, in other words, each of the chamfered regions has a linear shape when viewed from a cross section cut in a direction orthogonal to the peripheral edge of the glass plate. The first chamfered region 151 connects the first main surface 11 and the side surface 13, and the second chamfered region 152 connects the second main surface 12 and the side surface 13.

The chamfering is not limited to the above-described thread chamfering, and may be round chamfering in which the chamfered region has a curved cross section, that is, the surface of the chamfered region is a curved surface. Accordingly, in FIG. 4(a), the first chamfered region 151 connecting the first main surface 11 and the side surface 13 may be processed to have a curved surface instead of a flat surface, and the second chamfered region 152 connecting the second main surface 12 and the side surface 13 may be processed to have a curved surface instead of a flat surface. Furthermore, as in the example of FIG. 4(b), although the first chamfered region 151 adjacent to the first main surface and the second chamfered region 152 adjacent to the second main surface are formed, the first chamfered region 151 and the second chamfered region 152 may be processed so as to continuously form one curved surface without leaving the original side surface 13'.

The chamfering can be performed by a known chamfering device such as a cutting tool, a polishing tool, a laser, or, a known chamfering technique such as blasting or etching.

Referring again to FIG. 3, the automobile window laminated glass 1 according to the first embodiment will be described. In the laminated glass 1, the edges of the first glass plate 10 are chamfered to form the first glass plate chamfered regions 15. The edges of the second glass plate 20 is also chamfered to form the second glass plate chamfered regions 25. In the example illustrated in FIG. 3, the first glass plate chamfered regions 15 include the first chamfered region 151 adjacent to the first main surface 11 and the second chamfered region 152 adjacent to the second main surface 12, and the second glass plate chamfered regions 25 include the third chamfered region 251 adjacent to the third main surface 21 and the fourth chamfered region 252 adjacent to the fourth main surface 22. In the example illustrated in FIG. 3, all of the first chamfered region 151, the second chamfered region 152, the third chamfered region 251, and the fourth chamfered region 252 are formed by the thread chamfering, however, all or a part of the chamfered regions may be formed by the round chamfering. Furthermore, in the laminated glass 1 according to the present embodiment, all of the first chamfered region 151, the second chamfered region 152, the third chamfered region 251, and the fourth chamfered region 252 may not necessarily be formed, however, it is preferable that the four chamfered regions are formed from the above-described viewpoints such as prevention of injury to the worker and prevention of damage to the apparatus and other components.

### (Rough Surface Portion)

In this embodiment, at least a part of the chamfered region is roughened. More specifically, at least one of the first glass plate chamfered regions 15 and the second glass plate chamfered regions 25 (hereinafter, simply referred to as a chamfered region in some cases) is roughened to have a rough surface portion rs. More specifically, at least one of the first chamfered region 151, the second chamfered region 152, the third chamfered region 251, and the fourth chamfered region 252 is at least partially roughened and has the rough surface portion rs. In the present specification, the rough surface portion rs refers to a portion having an arithmetic average roughness Ra described in JIS B 0601:2013 of between 50 um and 200 um, inclusive. In this embodiment, since the chamfered region of the glass plate has the rough surface portion rs as described above, when the automobile window laminated glass 1 and a person collide with each other, the glass plate is moderately easy to break, and thus the impact on the person can be mitigated.

When a person collides with the automobile window laminated glass, a position (collision position) at which the laminated glass 1 directly receives impact is usually in the main surface (first main surface 11 or fourth main surface 22). However, energy of the impact received by the laminated glass 1 spreads from the collision position to the periphery thereof and propagates to the edge (peripheral edge) of the glass plate. Here, in the present embodiment in which the rough surface portion is formed in the chamfered region, stress is more likely to be concentrated on the fine surface irregularities of the rough surface portion, and thus the glass plate is more likely to break at the rough surface portion. That is, according to the present embodiment, the strength of the glass plate can be reduced at the edge (peripheral edge) thereof. Therefore, even if the generation of a crack does not start from the collision position in the main surface, the glass plate can break appropriately with the edge of the glass plate serving as the starting point of the crack, and the impact during the collision can be absorbed due to the crack. In recent years, regarding the performance of automobile window laminated glass, the viewpoint of body protection of a pedestrian or the like (pedestrian, cyclist, or the like) when the pedestrian or the like collides with the laminated glass as well as the viewpoint of protecting the occupant have been emphasized. Therefore, the automobile window laminated glass has also been required to meet specific criteria such as the Head Injury Criterion (HIC). According to the present embodiment described above, in either a case where an occupant collides with the vehicle-interior side glass plate of the laminated glass, a case where a pedestrian or the like collides with the vehicle-exterior side glass plate of the laminated glass, or both cases, the impact on the person can be mitigated or absorbed, and safety of the body of the person can therefore be ensured.

For the purpose of reducing impact on a person during a collision, for example, it is conceivable to change the glass composition or the like to make the glass material itself easy to break. In such a case, however, the original function as automobile window glass may be impaired. For example, the durability or the toughness may be reduced, thereby the function as a barrier against flying objects such as flying stones may be impaired. According to the embodiment, impact on a person during a collision can be reduced while maintaining the original function as automobile window glass without changing the glass composition or the like.

The roughness Ra of the rough surface portion rs provided in the chamfered region is preferably more than or equal to 50 µm, and more preferably more than or equal to 100 um. Thereby, the effect of absorbing impact to a person during a collision can be improved. From the viewpoint of preventing injury to a worker and damage to apparatus or other components during production, and the like, the upper limit of the roughness Ra is preferably less than or equal to 200 µm, and more preferably less than or equal to 150 um, from the viewpoint of maintaining the toughness of the glass plate.

The rough surface portion rs may be formed in a part of the chamfered region or may be formed in the entire chamfered region. In the former case, for example, one to three chamfered regions among the first chamfered region 151, the second chamfered region, the third chamfered region 251, and the fourth chamfered region 252 may have the rough surface portion rs, and the remaining chamfered region(s) may be free of the rough surface portion rs. Also, in one chamfered region, the rough surface portion rs and a portion other than the rough surface portion rs (a non-rough surface portion, that is, a portion having an arithmetic average roughness Ra described in JIS B 0601:2013 of less than 50 µm) may be provided adjacent to each other along the circumferential direction (x direction in FIG. 3) of the chamfered region or may be provided adjacent to each other along the thickness direction (z direction) of the chamfered region. The total area of the rough surface portions rs is, however, preferably more than or equal to 80%, more preferably more than or equal to 90%, and still more preferably more than or equal to 95% with respect to the total area of the chamfered regions in the automobile window laminated glass 1. Furthermore, it is preferable that the entire chamfered region in the automobile window laminated glass 1 is the rough surface portion rs, that is, the entire chamfered region is roughened. Thereby, the above-described effect of reducing the impact on the person during the collision can be improved.

When a person collides with a surface on one side of the automobile window laminated glass, the impact of the collision is transmitted, in the thickness direction, from the surface to other surface on the opposite side. In such a case, for example, when a person collides with the laminated glass from the outside of the automobile, a compressive stress is induced on the vehicle-exterior side main surface of the vehicle-exterior side glass plate and a tensile stress is induced on the vehicle-interior side main surface of the vehicle-exterior side glass plate. Therefore, the generation of a crack is likely to start from the vehicle-interior side main surface where the tensile stress has been induced. That is, from the viewpoint of reducing impact on a person outside an automobile during a collision, it is also preferable that either the chamfered region which is in contact with the vehicle-interior side main surface of the vehicle-exterior side glass plate is roughened, the chamfered region which is in contact with the vehicle-interior side main surface of the vehicle-interior side glass plate is roughened, or both are roughened. Accordingly, as in the example illustrated in FIG. 3, in a case where the first glass plate 10 is the vehicle-exterior side glass plate and the second glass plate 20 is the vehicle-interior side glass plate, it is preferable that either the second chamfered region 152 which is in contact with the second main surface 12 of the first glass plate 10 has the rough surface portion rs, the fourth chamfered region 252 which is in contact with the fourth main surface 22 of the second glass plate 20 has the rough surface portion rs, or both. It is particularly preferable that the second chamfered region 152 subjected to a larger impact has the rough surface portion rs.

For the same reason, from the viewpoint of reducing impact on a person inside an automobile during a collision, it is preferable to roughen the chamfered region which is in contact with the vehicle-exterior side main surface of the vehicle-interior side glass plate. It is also preferable to roughen the chamfered region which is in contact with the vehicle-exterior main surface of the vehicle-exterior side glass plate. Accordingly, as in the example illustrated in FIG. 3, in the case where the first glass plate 10 is the vehicle-exterior side glass plate and the second glass plate 20 is the vehicle-interior side glass plate, it is preferable that either the third chamfered region 251 which is in contact with the third main surface 21 of the second glass plate 20 has the rough surface portion rs, the first chamfered region 151 which is in contact with the first main surface 11 of the first glass plate 10 has the rough surface portion rs, or both. It is particularly preferable that the third chamfered region 251 subjected to a larger impact has the rough surface portion rs.

Furthermore, each surface roughness Ra of the different chamfered regions may be the same or may be different from each other. For example, the surface roughness Ra of the second chamfered region 152 may be made larger than the surface roughness Ra of the first chamfered region 151, and the first glass plate 10 can then be made easy to be cracked from the edge thereof with respect to the impact from the first glass plate 10 side. The surface roughness Ra of the third chamfered region 251 may be made larger than the surface roughness Ra of the fourth chamfered region 252, and the second glass plate 20 can then be made easy to be cracked from the edge thereof with respect to the impact from the second glass plate 20 side.

The surface roughness Ra of the rough surface portion rs in one chamfered region may be uniform or may non-uniform, depending on the position. In a case where the surface roughness Ra of the rough surface portion rs in one chamfered region is non-uniform, the surface roughness Ra may be non-uniform in the circumferential direction (x direction in the case of FIG. 3) or may be non-uniform in the thickness direction (z direction).

The rough surface portion rs in the chamfered region can be formed in a normal chamfering process by adjusting the processing conditions of the above-described chamfering device. Therefore, in the present embodiment, a configuration capable of absorbing impact on a person during a collision without requiring much labor and cost can be obtained. In a case where a polishing tool is used as a chamfering device, it can be adjusted by increasing the grain size of the grindstone of the polishing tool. For example, a polishing tool provided with a grindstone of between #160 and #200, inclusive, can be used to obtain the rough surface portion rs.

In the example of FIG. 3, among the end surfaces (surfaces that are not the main surfaces) of the first glass plate 10 and the second glass plate 20, the surfaces that are not the chamfered regions (the side surface 13 of the first glass plate 10 and the side surface 23 of the second glass plate 20) may or may not have the rough surface portion rs. That is, the side surface 13 and the side surface 23 may have an arithmetic average roughness Ra described in JIS B 0601:2013 of between 50 um and 200 µm, inclusive, or may be a non-rough surface portion having an arithmetic average roughness Ra described in JIS B 0601:2013 of less than 50 um. In a case where a polishing tool is used as a chamfering device, the non-rough surface portion as described above can be formed by using, for example, a grindstone of between #200 and #230, inclusive.

The rough surface portion rs may be formed on the entire peripheral edge of the automobile window laminated glass 1, or may be formed on a part of the peripheral edge. For example, the rough surface portion rs may be formed on, among the peripheral edges, at least one of the upper side 101, the lateral sides 102 and 103, and the lower side 104 (FIG. 2) of the automobile window laminated glass 1, and can be formed on the peripheral edge close to a portion where an appropriate crack is desired to be generated during a collision with a person, depending on the use of the laminated glass 1. According to recent research, it is known that when a person outside an automobile such as a pedestrian collides with a windshield of the automobile, the injury of the colliding person is likely to be severe when the person collides with the lower portion of the windshield ("Biomechanics of pedestrian impacted by passenger car", Journal of the Society of Biomechanisms, Vol. 36, No. 4 (2012)). Therefore, by appropriately making the lower portion of the windshield easy to break during a collision, a person who collides with the windshield can be prevented from being seriously injured. Accordingly, it is preferable to provide the rough surface portion rs in the chamfered region at the edge of the lower side 104, among the peripheral edges of the automobile window laminated glass 1. In particular, it is preferable that the first chamfered region 151, the second chamfered region 152, the third chamfered region 251, and the fourth chamfered region 252 are formed over the entire peripheral edge on the lower side 104 side and each has the rough surface portion rs, and it is more preferable that each is the rough surface portion rs.

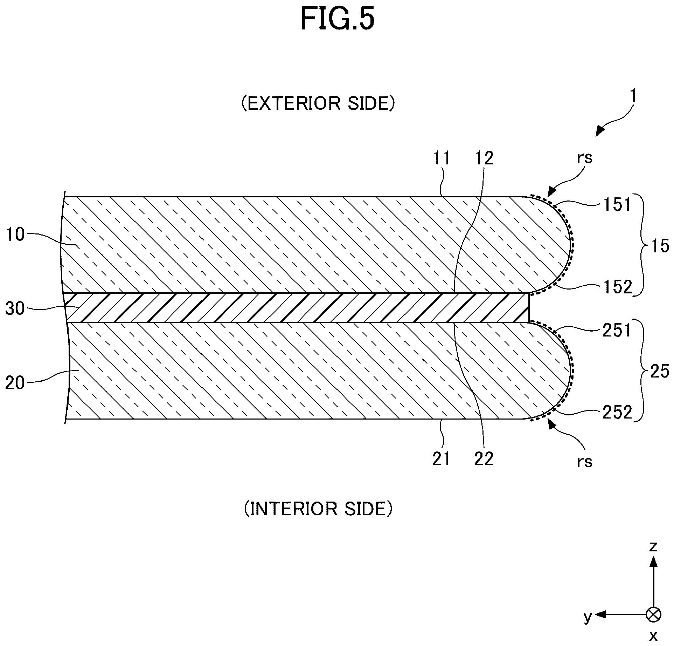

FIG. 5 illustrates automobile window laminated glass according to a modified example of the first embodiment. The laminated glass 1 illustrated in FIG. 5 has a configuration similar to that of the laminated glass 1 illustrated in FIG. 3. The laminated glass 1 illustrated in FIG. 5 is, however, different from that illustrated in FIG. 3 in that each of the edges of the first glass plate 10 and the second glass plate 20 has a curved shape. Specifically, in the laminated glass 1 illustrated in FIG. 5, each of the first glass plate chamfered regions 15 and the second glass plate chamfered regions 25 is a chamfered region having a curved shape in cross section, that is, a curved surface. Similar to the example of FIG. 3, the first glass plate chamfered regions 15 include a first chamfered region 151 and a second chamfered region 152, and the first chamfered region 151 and the second chamfered region 152 form a continuous curved surface. Similarly, the second glass plate chamfered regions 25 include the third chamfered region 251 and the fourth chamfered region 252, and the third chamfered region 251 and the fourth chamfered region 252 also form a continuous curved surface. In other words, in the example of FIG. 5, each of the entire end surfaces of the first glass plate 10 and the second glass plate 20 is subjected to the round chamfering.

Also, in the example of FIG. 5, each of the first chamfered region 151, the second chamfered region 152, the third chamfered region 251, and the fourth chamfered region 252 has the rough surface portion rs. Detail configuration of the rough surface portion rs is the same as that of the automobile window laminated glass 1 illustrated in FIG. 3.

### <Second Embodiment>

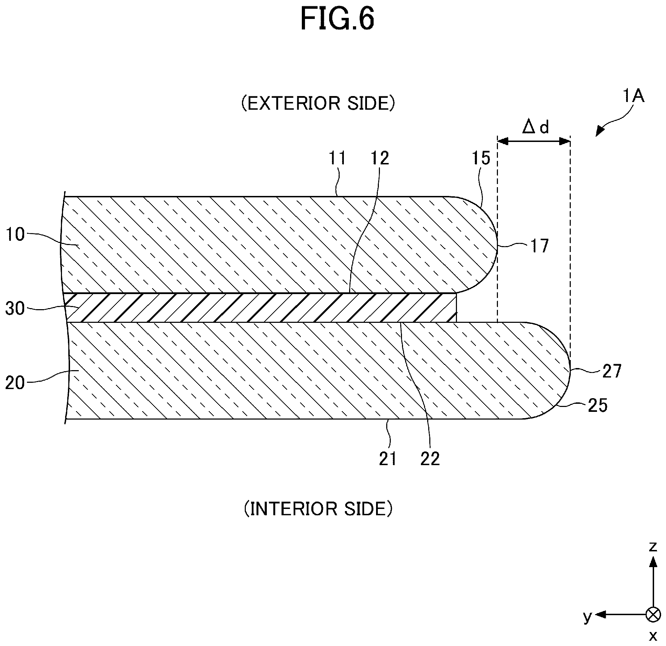

FIG. 6 illustrates automobile window laminated glass 1A according to a second embodiment. In the laminated glass 1A illustrated in FIG. 6, the position of an edge 17 of the first glass plate 10 and the position of an edge 27 of the second glass plate 20 are not aligned with each other, and are offset in the y direction in FIG. 6. More specifically, in at least a part of the peripheral edge of the glass plate, the position of the edge 17 of the first glass plate 10 is disposed on the inner side of the position of the edge 27 of the second glass plate 20, (at a position away from the outer peripheral end of the entire laminated glass). In other words, the second glass plate 20 more protrudes to the outside than the first glass plate 10. As described above, since the second glass plate 20 protrudes to the outside, when a person collides with the laminated glass 1A, particularly the second glass plate 20 breaks appropriately, and the impact on the person can be mitigated. Therefore, as illustrated in FIG. 6, in a case where the first glass plate 10 is situated on the vehicle-exterior side and the second glass plate 20 is situated on the vehicle-interior side, when a person inside the automobile collides with the laminated glass, the vehicle-interior side glass plate breaks easily from the edge thereof, and damage to the occupant or the like can be prevented. On the other hand, unlike the disposition illustrated in FIG. 6, in a case where the first glass plate 10 is situated on the vehicle-interior side and the second glass plate 20 is situated on the vehicle-exterior side, when a person collides with the laminated glass from the outside the automobile, the vehicle-exterior side glass plate appropriately breaks from the edge thereof, and damage to the pedestrian or the like can be prevented. In any case, for each of the first glass plate 10 and the second glass plate 20, the composition, the configuration of the central region in a plan view, and the like are not required to be changed, and thus durability or toughness as glass for automobile windows can be maintained.

In a case where the edges of the two glass plates are misaligned with each other as in the present embodiment, a misalignment Δd, that is, the distance between the position of the edge 17 of the first glass plate 10 and the position of the edge 27 of the second glass plate 20 may be between 2 mm and 3 mm, inclusive, in the direction perpendicular to the peripheral edge of the laminated glass (y direction in FIG. 6). In a case where Δd is within the above range, the protruding edge that protrudes more than the other edge easily becomes a starting point of a crack, and the configuration as laminated glass can be maintained.

The position where the edge 17 of the first glass plate 10 and the edge 27 of the second glass plate 20 are offset with each other may be at least a part of the upper side 101, the lateral sides 102 and 103, and the lower side 104 (FIG. 2) of the laminated glass. As described above, in a case where the automobile window laminated glass is a windshield, it is the lower portion of the windshield that is likely to cause serious injury to a pedestrian or the like who collides with the windshield. Therefore, by misaligning the edge 17 of the first glass plate 10 and the edge 27 of the second glass plate 20 over the lower side 104 of the laminated glass 1A, damage to a person can be effectively reduced.

Furthermore, the edges of the two glass plates may be misaligned over the entire periphery of the laminated glass 1A. In such a case, a configuration is obtained in which the first glass plate 10 is within the range of the second glass plate 20 and the area of the first glass plate 10 is smaller than the area of the second glass plate 20 in a plan view.

Such a configuration of the laminated glass 1A in which the edges of the first glass plate 10 and the second glass plate 20 are misaligned with each other in at least a part of the peripheral edge of the laminated glass can be combined with the configuration of the laminated glass 1 described with reference to FIG. 3 and FIG. 5 (the configuration in which the chamfered region of the edge has the rough surface portion rs). Accordingly, the ease of breakage of the glass plates when a person collides with the laminated glass can be appropriately adjusted.

### <Third Embodiment>

FIG. 7 illustrates automobile window laminated glass 1B according to a third embodiment. In the laminated glass 1B illustrated in FIG. 7, a thicknesses t1 of the first glass plate 10 and a thicknesses t2 of the second glass plate 20 are different from each other. In this example, as illustrated in FIG. 7, in a case where the laminated glass 1B is provided on the automobile, it is preferable that the first glass plate 10 is situated on the vehicle-exterior side and the second glass plate 20 is situated on the vehicle-interior side. That is, it is preferable that the thickness of the vehicle-exterior side glass plate is thinner than the vehicle-interior side glass plate. Accordingly, when a person collides with the automobile from outside thereof, the vehicle-exterior side glass breaks appropriately to absorb the impact.

The difference Δt(|t1-t2|) between the thickness t1 of the first glass plate 10 and the thickness t2 of the second glass plate 20 may be between 0.2 mm and 2.0 mm, inclusive. By setting Δt in the above range, a configuration in which impact on a person can be appropriately reduced, durability as a window glass can be maintained, and cracks or the like do not occur even when a flying object such as a flying stone or the like hits the window glass can be obtained.

Such a configuration of the laminated glass 1B in which the first glass plate 10 and the second glass plate 20 have different thicknesses can be combined with the configuration of the laminated glass 1 described with reference to FIG. 3 and FIG. 5 (the configuration in which the chamfered region of the edge has the rough surface portion rs). As a result, the ease of breakage of the glass plate when a person collides with the laminated glass can be appropriately adjusted.

### <Fourth Embodiment>

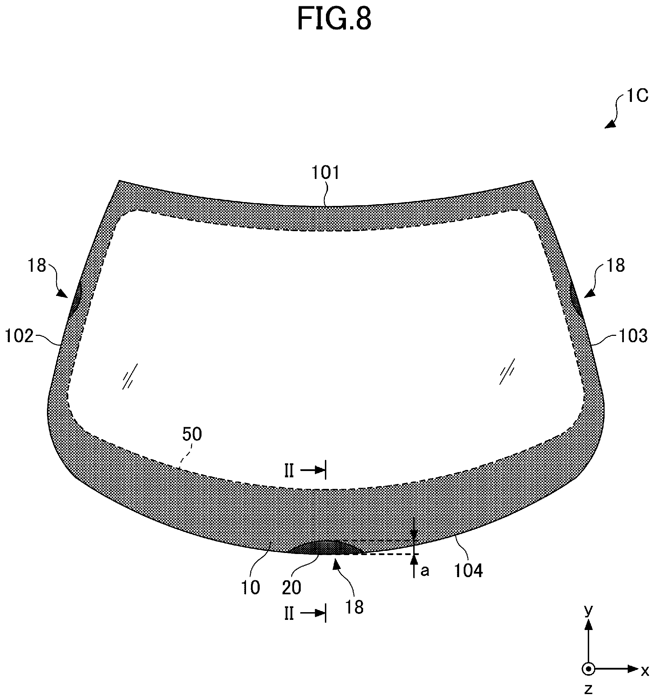

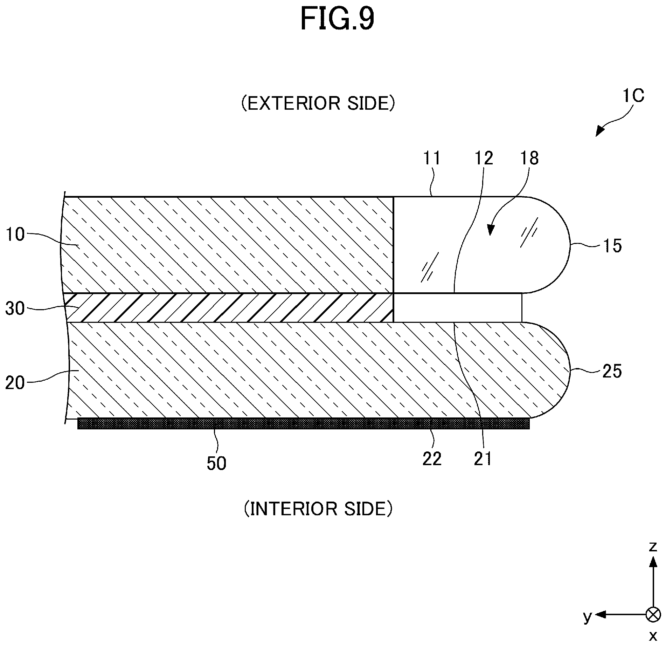

FIG. 8 illustrates automobile window laminated glass 1C according to a fourth embodiment. FIG. 8 is a plan view of the laminated glass 1C viewed from the outside of the automobile. FIG. 9 is a cross-sectional view taken along line II-II of FIG. 8. As illustrated in FIG. 8 and FIG. 9, in the laminated glass 1C, a recessed portion 18 is formed in the peripheral edge of the first glass plate 10. That is, a place where the peripheral edge of the first glass plate 10 is partially positioned inside the peripheral edge of the second glass plate 20 is formed.

Since stress is likely to be concentrated on such a recessed portion 18, when a person collides with the laminated glass, a crack starting point is likely to be formed at the edge of the first glass plate 10. Therefore, as in the example of FIG. 8, in the case where the first glass plate 10 is situated on the vehicle-exterior side and the second glass plate 20 is situated on the vehicle-interior side, it is preferable because, since the recessed portion 18 is formed in the first glass plate 10 that receives a larger impact when the person collides with the laminated glass from the outside of the automobile, impact on a person can be appropriately reduced especially when a person collides with the laminated glass from the outside of the automobile.

The recessed portion 18 can be formed on either side of the automobile window laminated glass 1C. For example, as illustrated in FIG. 8, one recessed portion 18 may be formed on each of the lower side 104 and the lateral sides 102 and 103 of the laminated glass. However, as described above, in the case where the automobile window laminated glass is a windshield, it is the lower portion of the windshield that is likely to cause serious injury to a pedestrian or the like who collides with the windshield. Thus, it is preferable that the strength of the lower portion of the laminated glass is reduced. Therefore, it is preferable that the recessed portion 18 is formed at least at the peripheral edge of the lower side 104. The number of recessed portions 18 may be one or more, however, the number is preferably three or less per side in consideration of the durability of the laminated glass 1C.

FIG. 8 and FIG. 9 also illustrate the above-described shielding layer 50 that is formed by applying a ceramic color paste firing and firing the paste. In this example, the shielding layer is provided on the fourth main surface 22 of the automobile window laminated glass 1C. The recessed portion 18 is preferably formed within a range where the shielding layer 50 is provided in a plan view.

A depth a of the recessed portion 18, that is the length from the edge portion to the deepest point of the recessed portion 18 as seen from a cross section perpendicular to the peripheral edge of the recessed portion (FIG. 8), may be between 50 mm and 200 mm, inclusive. In a case where the depth a of the recessed portion 18 is in the above range, the strength of the glass plate at the edge can be appropriately reduced, and the function as the window glass of the laminated glass 1C can be maintained.

In the example of FIG. 8, the contour of the recessed portion 18 is a part of a circle, however, the shape of the recessed portion 18 in a plan view is not limited to that illustrated in the drawing. For example, the shape of the recessed portion 18 in a plan view may be a quadrangle such as a trapezoid, or another polygon. In a case where the contour of the recessed portion 18 is a part of a circle as illustrated in FIG. 8, the curvature radius thereof may be between 130 mm and 1,000 mm, inclusive.

In the example illustrated in FIG. 8 and FIG. 9, the recessed portion is formed in the peripheral edge of the first glass plate 10 that is situated on the vehicle-exterior side, however, a similar recessed portion may be formed in the peripheral edge of the second glass plate 20 that is situated on the vehicle-interior side. In such a case, the vehicle-interior side glass plate can break appropriately particularly when a person collides with the laminated glass from the inside of the automobile. Therefore, it is preferable from the viewpoint of reducing impact on any occupants of the automobile.

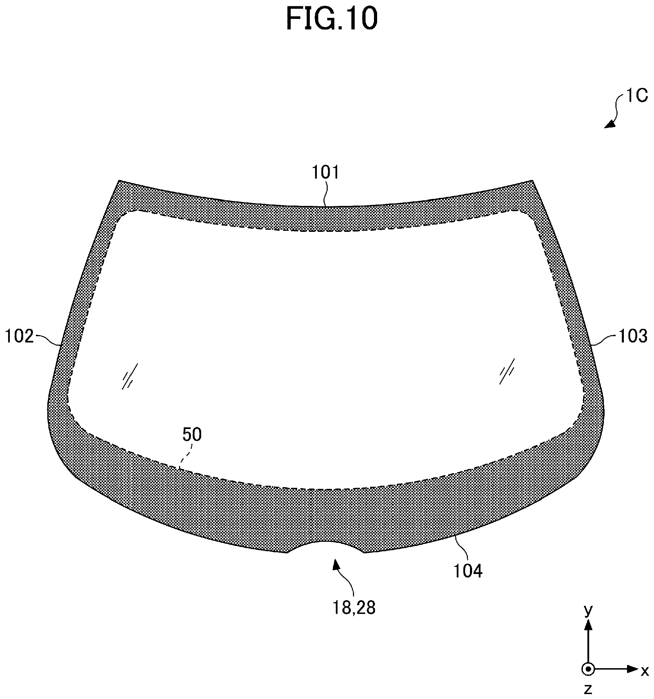

FIG. 10 illustrates a modified example of the fourth embodiment. In this example, the recessed portion 18 is formed in the peripheral edge of the first glass plate 10, and a recessed portion 28 is also formed in the peripheral edge of the second glass plate 20. In the example of FIG. 10, although the contours of both recessed portions 18 and 28 are the same in a plan view, the contours of the recessed portions 18 and 28 may be different from each other. According to this example, since the strength at the edges of both the first glass plate 10 and the second glass plate 20 can also be appropriately reduced, both the first glass plate 10 and the second glass plate 20 easily break during a collision, and the impact can be absorbed and mitigated.

The above-described configuration of the automobile window laminated glass 1C according to the fourth embodiment can also be combined with the configuration of the laminated glass 1 described with reference to FIG. 3 and FIG. 5 (the configuration in which the chamfered region of the edge has the rough surface portion rs) or the like. As a result, the ease of breakage of the glass plate when a person collides with the laminated glass can be appropriately adjusted.

The individual configurations included in the above-described first to fourth embodiments can be freely combined. Furthermore, in any of the above-described embodiments, each of the curvature radiuses of the first glass plate 10 and the second glass plate 20 can be configured to be more than or equal to 10,000 mm, which is preferable, or more than or equal to 15,000 mm, which is more preferable. As a result, the strength of the entire glass plate can be appropriately reduced, and thus the degree of freedom of other manufacturing conditions of the automobile window laminated glass can be increased. For example, even in a case where a thick glass plate is used or a strong glass material is used, by using a glass plate having the above-described curvature radius, the ease of breakage during a collision with the laminated glass can be adjusted. In a case where the automobile window laminated glass is used as a windshield, each of the curvature radiuses of the first glass plate 10 and the second glass plate 20 is preferably less than or equal to 10,000 mm in consideration of toughness and design.

### <Method for Producing Laminated Glass for Automobile Window>

An embodiment of the present disclosure may be a method for producing laminated glass for automobile windows described above. The method for producing laminated glass for automobile windows forms at least one of the chamfered region of the first glass plate and the chamfered region of the second glass plate to have a rough surface portion having an arithmetic average roughness Ra described in JIS B 0601:2013 of between 50 um and 200 µm, inclusive, the automobile window laminated glass including a first main surface of the first glass plate, the first main surface being situated on an opposite side of the first glass plate from the interlayer film, a second main surface of the first glass plate, the second main surface being in contact with the interlayer film, a third main surface of the second glass plate, the third main surface being in contact with the interlayer film, and a fourth main surface of the second glass plate, the fourth main surface being situated on an opposite side of the second glass plate from the interlayer film, each of the first glass plate and the second glass plate having a chamfered region at an edge thereof. According to the method, the automobile window laminated glass in which the strength at the edge thereof is appropriately reduced can be obtained. Accordingly, when an automobile and a person collide with each other, the glass plate appropriately cracks to absorb impact, so that damage to the person can be reduced.

The present application claims priority under Japanese Patent Application No. 2021-071148, filed April 20, 2021, the entire contents of which are hereby incorporated by reference.

### Description of Symbols

- 1: automobile window laminated glass
- 10: first glass plate
- 11: first main surface
- 12: second main surface
- 13: side surface of first glass plate
- 15: chamfered region of first glass plate
- 17: edge of first glass plate
- 18: recessed portion of first glass plate
- 20: second glass plate
- 21: third main surface
- 22: fourth main surface
- 23: side surface of second glass plate
- 25: chamfered region of second glass plate
- 27: edge of second glass plate
- 28: recessed portion of second glass plate
- 30: interlayer film
- 151: first chamfered region
- 152: second chamfered region
- 251: third chamfered region
- 252: fourth chamfered region
- 100: automobile
- rs: rough surface portion

## Claims

1. Laminated glass for automobile windows that is obtained by bonding a first glass plate to a second glass plate through an interlayer film, the laminated glass for automobile windows comprising:
a first main surface of the first glass plate, the first main surface being situated on an opposite side of the first glass plate from the interlayer film;
a second main surface of the first glass plate, the second main surface being in contact with the interlayer film;
a third main surface of the second glass plate, the third main surface being in contact with the interlayer film; and
a fourth main surface of the second glass plate, the fourth main surface being situated on an opposite side of the second glass plate from the interlayer film,
wherein each of the first glass plate and the second glass plate has a chamfered region at an edge thereof, and at least one of the chamfered region of the first glass plate and the chamfered region of the second glass plate has a rough surface portion having an arithmetic average roughness Ra described in JIS B 0601:2013 of between 50 um and 200 um, inclusive.

2. The laminated glass for automobile windows according to claim 1, wherein the chamfered region of the first glass plate includes a first chamfered region adjacent to the first main surface, and the first chamfered region has the rough surface portion.

3. The laminated glass for automobile windows according to claim 1, wherein the chamfered region of the first glass plate includes a second chamfered region adjacent to the second main surface, and the second chamfered region has the rough surface portion.

4. The laminated glass for automobile windows according to claim 1, wherein the chamfered region of the second glass plate includes a third chamfered region adjacent to the third main surface, and the third chamfered region has the rough surface portion.

5. The laminated glass for automobile windows according to claim 1, wherein the chamfered region of the second glass plate includes a fourth chamfered region adjacent to the fourth main surface, and the fourth chamfered region has the rough surface portion.

6. The laminated glass for automobile windows according to claim 1, wherein the rough surface portion is provided on either a lower side, lateral sides of the laminated glass, or both in a case where the laminated glass for automobile windows is provided on an automobile.

7. The laminated glass for automobile windows according to claim 1, wherein at least a part of a peripheral edge of the second glass plate is positioned inside a peripheral edge of the first glass plate in a plan view.

8. The laminated glass for automobile windows according to claim 1, wherein the first glass plate has a recessed portion at a peripheral edge in a plan view in at least either a lower side, a lateral side, or both, in a case where the laminated glass for automobile windows is provided on an automobile.

9. The laminated glass for automobile windows according to claim 1, wherein the second glass plate has a recessed portion at a peripheral edge in a plan view in either a lower side, a lateral side, or both, in a case where the laminated glass for automobile windows is provided on an automobile.

10. The laminated glass for automobile windows according to claim 1, wherein the first glass plate is situated on a vehicle-exterior side, and the second glass plate is situated on a vehicle-interior side, in a case where the laminated glass for automobile windows is provided on an automobile.

11. The laminated glass for automobile windows according to claim 10, wherein a thickness of the first glass plate is thinner than a thickness of the second glass plate.

12. An automobile comprising the laminated glass for automobile windows of any one of claims 1 to 11.

13. A method of producing laminated glass for automobile windows that is obtained by bonding a first glass plate to a second glass plate through an interlayer film,
wherein laminated glass for automobile windows includes:
a first main surface of the first glass plate, the first main surface being situated on an opposite side of the first glass plate from the interlayer film;
a second main surface of the first glass plate, the second main surface being in contact with the interlayer film;
a third main surface of the second glass plate, the third main surface being in contact with the interlayer film; and
a fourth main surface of the second glass plate, the fourth main surface being situated on an opposite side of the second glass plate from the interlayer film,
the method comprising forming a chamfered region at each edge of the first glass plate and the second glass plate, at least one of the chamfered region of the first glass plate and the chamfered region of the second glass plate including a rough surface portion having an arithmetic average roughness Ra described in JIS B 0601:2013 of between 50 um and 200 um, inclusive.
